# EUROPÄISCHE PATENTSCHRIFT

(11) **EP 4 058 703 B1**
(45) Veröffentlichungstag und Bekanntmachung des Hinweises auf die Patenterteilung: **17.01.2024**
(21) Anmeldenummer: 20807372.6
(22) Anmeldetag: 13.11.2020
(51) Int. Cl.: F16K 31/04, F16K 31/53, F16K 3/08, F16K 11/16

(54) **STELLVENTILANORDNUNG ZUM EINSTELLEN VON WENIGSTENS ZWEI FLUIDSTRÖMEN IN EINEM LEITUNGSSYSTEM**
CONTROL VALVE ASSEMBLY FOR ADJUSTING AT LEAST TWO FLUID FLOWS IN A LINE SYSTEM
ENSEMBLE SOUPAPE DE COMMANDE POUR LE RÉGLAGE D'AU MOINS DEUX ÉCOULEMENTS DE FLUIDE DANS UN SYSTÈME DE CONDUITES

(30) Priorität: 15.11.2019 DE 102019130952
(43) Veröffentlichungstag der Anmeldung: 21.09.2022
(73) Patentinhaber: WOCO Industrietechnik GmbH, 63628 Bad Soden-Salmünster (DE)
(72) Erfinder: LUDWIG, Uwe, 63628 Bad Soden-Salmünster (DE); MICHAELIS, Florian, 36391 Sinntal-Jossa (DE)
(74) Vertreter: Schmid, Nils T.F.
(86) Internationale Anmeldenummer: PCT/EP2020/082124
(87) Internationale Veröffentlichungsnummer: WO 2021/094577

(56) Entgegenhaltungen:
- CN-A- 103 090 040
- DE-B3-102017 218 864
- US-A- 4 749 004
- US-A1- 2001 035 510

## Beschreibung

Die Erfindung betrifft eine Stellventilanordnung zum Einstellen von wenigstens zwei Fluidströmen, insbesondere von wenigstens zwei Kühlflüssigkeitsströmen, in einem Leitungssystem insbesondere eines Kraftfahrzeugs, wie eines elektrisch angetriebenen Kraftfahrzeugs.

Stellventilanordnungen können beispielsweise zur Kühlwasserverteilung in Kraftfahrzeugen eingesetzt werden. Dabei dient die Stellventilanordnung der Einstellung mehrerer Fluidströme, wie Kühlwasserströme. Unter dem Einstellen der Fluidströme ist dabei insbesondere das Leiten der Fluidströme zwischen Wärmequellen, wie Motoren und Batterien, und Wärmesenken, wie Kühlaggregate, zu verstehen. Dabei fällt unter Einstellen insbesondere die Einstellung der Durchflussmenge sowie das vollständige Versperren und Freigeben von Durchflusswegen durch die Stellventilanordnung. Insbesondere durch die steigende Anzahl an elektrischen Antrieben, die in moderne Kraftfahrzeuge eingebaut werden, sowie durch den zunehmenden Einsatz von Elektromotoren anstelle von Verbrennungsmotoren, steigt die Anzahl an Wärmequellen die durch die Fluidströme gekühlt werden müssen und somit die Anzahl an Fluidströmen die von der Stellventilanordnung eingestellt werden müssen. Ferner führt die Variantenvielfalt bei Kraftfahrzeugen zu unterschiedlichen Anforderungen hinsichtlich der Anzahl der Fluidströme die eingestellt werden müssen und der für die Kühlung erforderlichen Durchflussmengen, die beispielsweise je nach Motorleistung variieren kann. Insbesondere deshalb besteht ein Bedarf nach Stellventilanordnungen, mit denen mehrere Fluidströme eingestellt werden können, wobei die Stellventilanordnungen möglichst einfach an wechselnde Anforderungen hinsichtlich der Anzahl und der Durchflussmenge der einzustellenden Fluidströme angepasst werden können soll. Gleichzeitig gilt es insbesondere bei Kraftahrzeugen den Bauraumbedarf für derartige Stellventilanordnungen möglichst gering zu halten.

Zur Einstellung von mehreren Fluidströmen ist es bekannt Stellventile mit mehreren Schließkörpern zu verwenden die jeweils Durchflusswege durch das Stellventil versperren und freigeben können. Um den erforderlichen Bauraum für den Antrieb derartiger Stellventile zu reduzieren, ist es bekannt mehrere Schließkörper über einen gemeinsamen Antrieb anzutreiben. Ein derartiges Stellventil ist beispielsweise aus US 7,793,915 bekannt. Darin werden zwei Schließkörper in Form von Drehschiebern eingesetzt. Die Drehschieber sind jeweils mit Zahnrädern verbunden, die über ein Ritzel eines gemeinsamen Antriebes angetrieben werden, sodass ein zweiter Antrieb für den zweiten Schließkörper eingespart werden kann.

Nachteilhaft an dem in US 7,793,915 vorgeschlagenen Stellventil ist, dass die Getriebemechanik zwischen dem Ritzel und den Drehschiebern strukturell auf die einzustellenden Schaltstellungen des Stellventils ausgelegt werden muss. Änderung in der Art, Anzahl oder Abfolge der Schaltstellungen, die das Stellventil einnehmen können soll, erfordern daher in der Regel strukturelle Änderungen an dem Stellventil von einfachen Umbauten bis hin zur Neuauslegung des Stellventils. Ferner steigt mit der Anzahl der einnehmbaren Schaltstellungen die Komplexität der Getriebemechanik, was zu einem erhöhten Bauraumbedarf und zu erhöhten Fertigungs-, Montage- und Wartungskosten führt. Darüber hinaus ist eine Massenfertigung derartiger Ventile nur beschränkt skalierbar, da für unterschiedliche Schaltstellungsanforderungen die Getriebemechanik zwischen Antriebsscheibe und Schließkörper in der Regel individuell ausgelegt werden muss.

US 4,749,004 offenbart ein Stellventilanordnung nach dem Oberbegriff des Anspruchs 1.

Es ist Aufgabe der Erfindung Nachteile des Standes der Technik zu überwinden, insbesondere eine Stellventilanordnung zum Einstellen von wenigstens zwei Fluidströmen bereitzustellen, die insbesondere bei reduziertem oder gleichbleibendem Bauraumbedarf eine flexiblere Einstellung von wenigstens zwei Fluidströmen ermöglicht.

Die Aufgabe wird gelöst durch den Gegenstand des unabhängigen Anspruchs 1.

Demnach ist eine Stellventilanordnung zum Einstellen von wenigstens zwei Fluidströmen, insbesondere von wenigstens zwei Kühlflüssigkeitsströmen, in einem Leitungssystem insbesondere eines Kraftfahrzeugs, wie eines elektrisch angetriebenen Kraftfahrzeugs, vorgesehen. Die Stellventilanordnung umfasst wenigstens zwei Schließkörper zum Versperren und Freigeben von jeweils wenigstens einem Durchflussweg und einen Antrieb zum Stellen der wenigstens zwei Schließkörper. Ferner umfasst die erfindungsgemäße Stellventilanordnung eine Kupplung mit einer Einkoppelstellung, in der der Antrieb mit einem der wenigstens zwei Schließkörper kraftübertragend gekoppelt ist, und einer Auskoppelstellung, in der der Antrieb von dem einen der wenigstens zwei Schließkörper entkoppelt ist.

Unter dem Einstellen der Fluidströme ist insbesondere das Zusammenführen mehrerer Fluidströme zu einem Fluidstrom, das Aufteilen eines Fluidstroms in mehrere Fluidströme, das Einstellen der Durchflussmenge eines Fluidstroms und/oder das Versperren und Freigeben von Durchflusswegen der Fluidströme durch die Stellventilanordnung zu verstehen. Unter einem Durchflussweg ist insbesondere eine fluidale Verbindung zwischen einem Fluideingang zum Einführen eines Fluidstroms in die Stellventilanordnung und einem Fluidausgang zum Abführen des Fluidstroms aus der Stellventilanordnung zu verstehen. Die Fluideingänge und Fluidausgänge eines Durchflussweges sind, wie weiter unten im Detail beschrieben, vorzugsweise an einem Gehäuse, insbesondere an jeweils einer von zwei Gehäusehälften, ausgebildet, das vorzugsweise den Schließkörper zum Versperren dieses Durchflussweges umschließt. Durch Stellen des entsprechenden Schließkörpers kann vorzugsweise jeweils wenigstens ein Durchflussweg versperrt oder freigegeben werden.

Unter dem Einstellen von wenigstens zwei Fluidströmen ist im weitesten Sinne zu verstehen, dass wenigstens zwei Fluidströme in die Stellventilanordnung eingeführt werden können oder wenigstens zwei Fluidströme aus der Stellventilanordnung abgeführt werden können. Es ist nicht zwingend erforderlich, dass wenigstens zwei Fluidströme gleichzeitig zugeführt werden können oder gleichzeitig abgeführt werden können. Vorzugsweise ist die Stellventilanordnung jedoch derart ausgeführt, dass wenigstens zwei Fluidströme insbesondere unabhängig voneinander der Stellventilanordnung gleichzeitig zugeführt und gleichzeitig abgeführt werden können. Bevorzugt ist die Stellventilanordnung zum Einstellen von wenigstens zwei Liquidströmen, wie Kühlflüssigkeitsströmen, ausgebildet. Als Kühlflüssigkeitsströme können insbesondere Wasserströme vorgesehen sein.

Die wenigstens zwei Schließkörper sind als Drehschieber ausgebildet. Ein Vorteil, der sich insbesondere aus der Verwendung eines Drehschiebers als Schließkörper ergibt, ist, dass durch Drehung des Drehschiebers um sein Rotationsachse mehrere Durchflusswege über einen Schließkörper versperrt und/oder freigegeben werden können. Vorzugsweise weist wenigstens einer der wenigstens zwei, besonders bevorzugt wenigstens zwei, drei, vier oder jeder, der Drehschieber wenigstens eine oder zwei Durchlassaussparung zum Freigeben des jeweils wenigstens einen Durchflussweges auf. Besonders bevorzugt ist die Durchlassaussparung ringabschnittsförmig, insbesondere nierenförmig, ausgebildet. Insbesondere erstreckt sich die Durchlassaussparung um 30° bis 150°, vorzugsweise um 60° bis 120°, besonders bevorzugt um 75° bis 105°. Die Durchlassaussparung durchdringt die Drehschieber in Axialrichtung vorzugsweise vollständig. In Umfangsrichtung und in Radialrichtung ist die Durchlassaussparung vorzugsweise vollständig von dem Drehschieber umschlossen. Besonders bevorzugt ist die Durchlassaussparung in Umfangsrichtung und in Radialrichtung wenigstens so groß wie die Fluideingänge und die Fluidausgänge.

Der Antrieb ist derart ausgestaltet und/oder positioniert, dass er beide der wenigstens zwei Schließkörper stellt kann. Vorzugsweise ist der Antrieb mittig zwischen den wenigstens zwei Drehschiebern positioniert.

Die wenigstens eine Kupplung ist derart ausgestaltet, dass der eine der wenigstens zwei Schließkörper mit dem Antrieb gekoppelt und von diesen entkoppelt werden kann. Wie weiter unten im Detail beschrieben, ist es bevorzugt, dass für jeden Schließkörper wenigstens eine Kupplung vorgesehen ist, über die der jeweilige Schließkörper jeweils mit dem Antrieb gekoppelt und von diesen entkoppelt werden kann. In einer weniger bevorzugten Ausführungsform ist es jedoch auch möglich, dass lediglich der eine Schließkörper von dem Antrieb entkoppelt werden kann, während der andere Schließkörper stets mit dem Antrieb gekoppelt ist.

Durch die Möglichkeit wenigstens den einen der wenigstens zwei Schließkörper von dem Antrieb entkoppelt zu können, kann der andere Schließkörper unabhängig von dem einen Schließkörper gestellt werden. Dadurch wird eine erhöhte Flexibilität bei der Einstellung der wenigstens zwei Fluidströme ermöglicht. Dabei hat sich überraschenderweise herausgestellt, dass trotz des Bauraumbedarfs für die Kupplung der gesamte Bauraumbedarf dadurch reduziert werden kann, dass der erforderliche Bauraum für die Schließkörper sowie für die Fluideingänge und für die Fluidausgänge aufgrund der flexibleren Einstellmöglichkeiten reduziert werden kann. Dabei hat sich insbesondere die Verwendung von Drehschiebern als besonders bauraumsparend in Verbindung mit der erfindungsgemäßen Maßnahme herausgestellt.

Gemäß der Erfindung weist der Antrieb eine Antriebsscheibe, insbesondere ein Antriebszahnrad, auf und ist den wenigstens zwei Schließkörpern jeweils eine Abtriebsscheibe, insbesondere jeweils ein Zahnkranz, zugeordnet, über die der Antrieb die wenigstens zwei Schließkörper stellt. Unter der Zuordnung jeweils einer Abtriebsscheibe zu den wenigstens zwei Schließkörpern ist insbesondere zu verstehen, dass die wenigstens zwei Schließkörper jeweils über eine eigene Abtriebsscheibe von dem Antrieb gestellt werden. Dabei kann es sich bei den Abtriebsscheiben in weniger bevorzugten Ausführungsformen um gegenüber den Schließkörpern separate Bauteile handeln. Vorzugsweise sind die Abtriebsscheiben, wie weiter unten im Detail beschrieben, jedoch in Bauteilunion mit den jeweiligen Schließkörpern ausgebildet.

Es sei klar, dass die Antriebsscheibe nicht zwingend in Kontakt mit der Abtriebsscheibe stehen muss. Vielmehr ist es bevorzugt, dass die Antriebsscheibe unabhängig von der Stellung der Kupplung stets von der Abtriebsscheibe beabstandet ist. Dabei wird, wie weiter unten im Detail beschrieben, die Kupplung von Antriebsscheibe und Abtriebsscheibe über eine Kuppelscheibe der wenigstens einen Kupplung gewährleistet. In einer weniger bevorzugten Ausführungsform kann die Kupplung von Antriebsscheibe und Abtriebsscheibe jedoch auch über eine direkte Kraftübertragung zwischen Antriebsscheibe und Abtriebsscheibe erfolgen.

Unter einer Scheibe im Sinne einer Antriebsscheibe, einer Abtriebsscheibe oder eine Kuppelscheibe ist insbesondere ein flachzylinderartiger und/oder ringartiger Körper zu verstehen. Die Kraftübertragung von einer Scheibe auf eine andere Scheibe erfolgt vorzugsweise über die Umfangskontur der Scheiben. In einer bevorzugten Ausführungsform ist die Umfangskontur der Antriebsscheibe, der Abtriebsscheibe und/oder der Kuppelscheibe jeweils als Zahnkranz ausgebildet. Dabei kann die Scheibe als ringartiger Körper aus einem Zahnkranz bestehen oder als flachzylinderartiger Körper zahnradartig aufgebaut sein. Besonders bevorzugt ist die Antriebsscheibe als Antriebszahnrad, die wenigstens eine Kuppelscheibe als Kuppelzahnrad, und die den wenigstens zwei Schließkörper zugeordneten Abtriebsscheibe jeweils als Zahnkranz ausgebildet.

Gemäß der Erfindung sind die wenigstens zwei Schließkörper als insbesondere scheibenförmige Drehschieber ausgebildet, die vorzugsweise jeweils wenigstens eine Durchlassaussparung zum Freigeben des jeweils wenigstens einen Durchflussweges aufweisen. Unter einem Drehschieber ist insbesondere ein scheibenförmiger Schließkörper zu verstehen, der durch Drehung um seine Rotationsachse gestellt wird. Vorzugsweise sind die Abtriebsscheiben derart ringförmig ausgebildet, dass sie sich in Umfangsrichtung um die Rotationsachse des Drehschiebers erstrecken ohne die Durchlassaussparung in Axialrichtung zu überdecken. Dadurch können insbesondere Fluideingänge und Fluidausgänge fluchtend mit den Durchlassaussparungen der Drehschieber ausgebildet werden, sodass Fluidströme die Stellventilanordnung insbesondere im Wesentlichen umlenkungsfrei passieren können und insbesondere Druckverluste reduziert werden können.

Vorzugsweise sind die Drehschieber mit den jeweiligen Abtriebsscheiben fest verbunden, insbesondere einstückig ausgebildet. Erfindungsgemäß erstrecken sich die Abtriebsscheiben jeweils entlang der Außenkontur der Drehschieber, wobei die Abtriebsscheiben vorzugsweise als die Drehschieber umlaufende Zahnkränze ausgebildet sind. Insbesondere erstrecken sich die Abtriebsscheiben jeweils auf der axialen Höhe der Drehschieber.

In einer bevorzugten Ausführungsform bilden die Schließkörper zusammen mit der Antriebsscheibe eine Getriebemechanik. Insbesondere sind die den Schließkörpern zugeordneten Abtriebsscheiben jeweils durch die Außenkontur der Schließkörper gebildet.

Besonders bevorzugt sind die Schließkörper jeweils in Bauteilunion mit der ihnen zugeordneten Antriebsscheibe ausgebildet. Vorzugsweise ist die jeweilige Bauteilunion, umfassend einen Schließkörper und eine dem Schließkörper zugeordnete Abtriebsscheibe einstückig ausgebildet. Unter Bauteilunion ist insbesondere zu verstehen, dass der Schließkörper und die dem Schließkörper zugeordnete Antriebsscheibe durch eine geometrische Grundform realisiert wird, die die Funktionen des Schließkörpers und die der dem Schließkörper zugeordneten Abtriebsscheibe in der geometrischen Grundform vereint. Die bevorzugte geometrische Grundform für die Bauteilunion ist eine Scheibe. Dabei kann, wie zuvor und folgend beschrieben, die Außenkontur der Scheibe bevorzugt die Funktion der Abtriebsscheibe, insbesondere in Form eines die Scheibe umlaufenden Zahnkranzes, bereitstellen, während die Innenkontur der Scheibe, insbesondere in Form einer Absperrscheibe mit Durchlassaussparung, vorzugsweise zum Versperren und/oder Freigeben des jeweils wenigstens einen Durchflussweges eingesetzt werden kann. Insbesondere ist in der Innenkontur der Scheibe wenigstens eine Durchlassaussparung vorgesehen, durch die die Fluidströme insbesondere wenigstens einen Durchflussweg passieren können. In einer besonders bevorzugten Ausführungsform der Bauteilunion ist wenigstens einer, vorzugsweise wenigstens zwei, drei, vier oder jeder, der wenigstens zwei Schließkörper und die dem jeweiligen Schließkörper zugeordnete Abtriebsscheibe durch ein die Bauteilunion bildendes Abtriebszahnrad gebildet, wobei insbesondere der wenigstens eine der wenigstens zwei Schließkörper durch die scheibenförmige Grundform des Abtriebszahnrades, insbesondere einer Absperrscheibe, gebildet ist und die dem Schließkörper zugeordneten Abtriebsscheibe durch den den scheibenförmigen Grundkörper umlaufenden Zahnkranz gebildet ist.

Soweit im Folgenden bevorzugte Ausführungsformen hinsichtlich der Anordnung und/oder Befestigung der Antriebsscheibe und/oder der wenigstens einen Kuppelscheibe relativ zu der Abtriebsscheibe beschrieben werden, sind diese insbesondere auch für die Anordnung relativ zum Schließkörper bevorzugt und umgekehrt. Besonders bevorzugt beziehen sich die Ausführungsformen hinsichtlich der Anordnung und/oder der Befestigung der Antriebsscheibe und der wenigstens einen Kuppelscheibe relativ zu der Abtriebsscheibe oder zu dem Schließkörper auf die Ausführungsform der Bauteilunion aus Abtriebsscheibe und Schließkörper in Form eines Abtriebszahnrades.

Gemäß einer bevorzugten Ausführungsform der vorliegenden Erfindung erstrecken sich die Antriebsscheiben und die Abtriebsscheibe, insbesondere unabhängig von der Stellung der wenigstens einen Kupplung, in einer gemeinsamen Ebene, wobei vorzugsweise die Rotationsachse der Antriebsscheibe die Normale der gemeinsamen Ebene definiert.

Dadurch wird insbesondere der Bauraumbedarf der Stellventilanordnung in Axialrichtung der Antriebsscheibe reduziert. Ferner hat sich herausgestellt, dass die Anordnung der Abtriebsscheiben in einer Ebene mit dem Antrieb zu einer erhöhten Zugänglichkeit der Abtriebsscheiben von der Normalenrichtung der Ebene führt. Besonders vorteilhaft ist dies insbesondere bei der Ausführung der Antriebsscheiben und der Schließkörper in einer Bauteilunion. Denn durch die erhöhte Zugänglichkeit von der Normalenrichtung der gemeinsamen Ebene, können Fluideingänge und Fluidausgänge in Normalenrichtung an die Ventilanordnung anschließen und insbesondere mit Durchlassaussparungen in den Schließkörpern fluchten. Dadurch kann insbesondere eine im Wesentlichen umlenkungsfreie Durchleitung von Fluiden durch die Stellventilanordnung realisiert werden, was insbesondere zu Platzersparnissen des gesamten Leitungssystems und zu kleineren Druckverlusten im Leitungssystem führen kann.

Besonders bevorzugt sind die Antriebsscheibe und die Abtriebsscheiben in Radialrichtung und in Axialrichtung ortsfest befestigt. Dabei wird die Einkoppelstellung und die Auskoppelstellung insbesondere durch Relativbewegung eines Kuppelglieds, wie die weiter unten beschriebene Kuppelscheibe, realisiert. Insbesondere durch die ortsfeste Befestigung der Abtriebsscheiben in Radialrichtung und in Axialrichtung, können diese vereinfacht, insbesondere bauraumsparend, in Bauteilunion mit den ihnen zugeordneten Schließkörpern ausgebildet werden. Insbesondere bei der Ausgestaltung der Schließkörper als Drehschieber ermöglicht die ortsfeste Befestigung der Abtriebsscheiben eine Ausführung der Abtriebsscheiben in Bauteilunion mit den Ihnen zugeordneten Drehschiebern, ohne einen erhöhten Bauraumbedarf, beispielsweise für dynamische Dichtungen, zur Sicherstellung der Versperr- und Freigebefunktion der Schließkörper zu erzeugen.

Besonders bevorzugt ist die Antriebsscheibe mittig zwischen den Abtriebsscheiben angeordnet. Dadurch können insbesondere mehrere Abtriebsscheiben über eine gemeinsame Antriebsscheibe angetrieben werden. Besonders bevorzugt sind die Abtriebsscheiben unabhängig von der Stellung der wenigstens einen Kupplung von der Antriebsscheibe beabstandet, insbesondere in einer gemeinsamen Ebene von Antriebsscheibe und Abtriebsscheibe beabstandet. Darunter ist insbesondere zu verstehen, dass sich die Antriebsscheibe und die Abtriebsscheibe nicht berühren. Insbesondere dadurch kann die Einkoppelstellung durch ein Verfahren eines Kuppelgliedes zwischen die Antriebsscheibe und Abtriebsscheibe hergestellt werden. Dabei verfährt das Kuppelglied vorzugsweise derart zwischen die Antriebsscheibe und die Abtriebsscheibe, dass der Abstand zwischen Antriebsscheibe und Abtriebsscheibe durch das Kuppelglied überbrückt wird. Vorzugsweise ist das Kuppelglied dabei als Kuppelzahnrad ausgebildet, dessen Zähne in der Einkoppelstellung zwischen die Zähne einer als Antriebszahnrad ausgebildeten Kuppelscheibe und einer als Zahnkranz ausgebildeten Abtriebsscheibe eingreift. Dazu fährt das Kuppelglied vorzugsweise in eine gemeinsame Ebene von Antriebsscheibe und Abtriebsscheibe.

Gemäß einer bevorzugten Ausführungsform der vorliegenden Erfindung weist die wenigstens eine Kupplung eine Kuppelscheibe, insbesondere ein Kuppelzahnrad, auf, das in der Einkoppelstellung in Eingriff mit der Antriebsscheibe und der Abtriebsscheibe des einen Schließkörpers steht.

Vorzugsweise weisen die Kuppelscheibe, die Antriebsscheibe und die dem einen Schließkörper zugeordnete Abtriebsscheibe jeweils einen Zahnkranz auf, wobei sich vorzugsweise die Zahnkränze der Kuppelscheibe, der Antriebsscheibe und der dem einen Schließkörper zugeordneten Abtriebsscheibe in Einkoppelstellung in einer Ebene erstrecken.

Die Kuppelscheibe überträgt insbesondere eine Antriebskraft von der Antriebsscheibe auf die Abtriebsscheibe. Unter dem Begriff Eingriff ist insbesondere zu verstehen, dass eine Kraftübertragung von der einen Scheibe auf die andere Scheibe stattfindet. Ein direkter Kontakt zwischen zwei Scheiben ist für einen Eingriff im Sinne der vorliegenden Erfindung nicht zwingend erforderlich. Vorzugsweise ist die Kuppelscheibe in direktem Eingriff mit der Antriebsscheibe und/oder der dem einen Schließkörper zugeordneten Abtriebsscheibe. Unter einem direkten Eingriff zweier Scheiben miteinander ist im Sinne der vorliegenden Erfindung ein direkter Kontakt zwischen zwei Scheiben zu verstehen. Vorzugsweise erfolgt der direkte Eingriff zwischen der Kuppelscheibe und der Antriebsscheibe und/oder der dem einen Schließkörper zugeordneten Abtriebsscheibe über die Scheibenaußenkontur. Besonders bevorzugt erfolgt der Eingriff zwischen den Scheiben über sich kämmende Zähne insbesondere von Zahnkränzen und/oder Zahnrädern der Scheiben.

In einer bevorzugten Ausführungsform stehen Zähne der Antriebsscheibe, der Kuppelscheibe und der dem Schließkörper zugeordneten Abtriebsscheibe in direkten Eingriff miteinander. Vorzugsweise ist die Kuppelscheibe als Kuppelzahnrad ausgebildet und kämmt in Einkoppelstellung die als Zahnkranz und insbesondere in Bauteilunion mit dem einen Schließkörper ausgebildete Abtriebsscheibe und/oder die als Antriebszahnrad ausgebildete Antriebsscheibe.

Die Kuppelscheibe ist insbesondere als Kuppelritzel ausgebildet. Als Ritzel im Sinne der vorliegenden Erfindung sind insbesondere Zahnräder zu verstehen, die kleiner als ein oder mehrere Zahnräder sind, mit denen sie im direkten Eingriff stehen. Vorzugsweise beträgt der Durchmesser der Kuppelscheibe höchstens 80 %,60 %, 40 % oder 20 % des Durchmessers der Antriebsscheibe und/oder höchstens 60 %, 40 %, 20 % oder 10 % des Durchmessers der dem einen Schließkörper zugeordneten Abtriebsscheibe. Vorzugsweise ist der Durchmesser der Abtriebsscheibe wenigstens 20 %, 40 %, 60 % oder 80 % größer als der Durchmesser der Antriebsscheibe.

Vorzugsweise erstrecken sich insbesondere die Rotationsachse der Kuppelscheibe, der Antriebscheibe und der Abtriebsscheiben parallel zueinander.

Gemäß einer bevorzugten Ausführungsform der vorliegenden Erfindung erstreckt sich die Kuppelscheibe in der Einkoppelstellung in einer gemeinsamen Ebene mit der Antriebsscheibe und der Abtriebsscheibe des einen Schließkörpers. Besonders bevorzugt erstreckt sich die Kuppelscheibe in der Einkoppelstellung in einer gemeinsamen Ebene mit der Antriebsscheibe und jeder der den wenigstens zwei Schließkörpern zugeordneten Abtriebsscheibe. Dabei sind besonders bevorzugt die Abtriebsscheibe und die Schließkörper jeweils in Bauteilunion ausgebildet, sodass sich auch die Schließkörper in der gemeinsamen Ebene erstrecken. Besonders bevorzugt ist jedem der wenigstens zwei Schließkörper jeweils eine der wenigstens einen Kupplung zugeordnet, wobei jede der Kupplungen jeweils eine Abtriebsscheibe aufweist, die in der Einkoppelstellung in Eingriff, insbesondere direkten Eingriff, mit der Antriebsscheibe und der dem jeweiligen Schließkörper zugeordneten Abtriebsscheibe steht. Insbesondere erstreckt sich jede Kuppelscheibe in Einkoppelstellung vorzugsweise in einer gemeinsamen Ebene mit der Abtriebsscheibe, der die entsprechende Kupplung zugeordnet ist.

Alternativ oder zusätzlich ist die Kuppelscheibe in der Auskoppelstellung gegenüber einer gemeinsamen Ebene der Antriebsscheibe und der dem einen Schließkörper zugeordneten Abtriebsscheibe versetzt, wobei insbesondere die Rotationsachse der Antriebsscheibe die Normale der gemeinsamen Ebene definiert. Vorzugsweise sind sämtliche Kuppelscheiben in der Auskoppelstellung in die gleiche Richtung und/oder um den gleichen Betrag gegenüber der Ebene versetzt, insbesondere in Normalentrichtung der Ebene versetzt.

Vorzugsweise erstrecken sich die Rotationsachsen der Antriebsscheibe, der dem einen Schließkörper zugeordneten Abtriebsscheibe und der Kuppelscheibe parallel zueinander, wobei sich die Rotationsachse der Kuppelscheibe beabstandet, insbesondere um wenigstens 10 %, 30 %, 50 % oder 70 % der Radialerstreckung der Abtriebsscheibe beabstandet, von einer Verbindungslinie zwischen den Rotationsachsen der Antriebsscheibe und der dem einen Schließkörper zugeordneten Abtriebsscheibe erstreckt.

Gemäß einer vorteilhaften Weiterbildung der vorliegenden Erfindung weist die wenigstens eine Kupplung einen insbesondere als Linearantrieb ausgebildeten Kuppelantrieb, insbesondere einen elektromagnetischen Kuppelantrieb, auf, über den die Kupplung, insbesondere eine Kuppelscheibe der Kupplung, in Einkoppelstellung und in Auskoppelstellung versetzt werden kann. Der Kuppelantrieb dient insbesondere als Stellantrieb über den ein Kuppelglied gestellt wird, um die Kupplung in Einkoppelstellung und Auskoppelstellung zu versetzen. Als Kuppelglied wird bevorzugt eine Kuppelscheibe, besonders bevorzugt ein Kuppelzahnrad, verwendet. Der Kuppelantrieb ist insbesondere als Linearantrieb ausgebildet, um die Kuppelscheibe parallel zur Rotationsachse der Antriebsscheibe und/oder zur Rotationsachse der Abtriebsscheibe stellen zu können. Zum Versetzen der Kupplung in Einkoppelstellung wird vorzugsweise die Kuppelscheibe in eine gemeinsame Ebene mit der Antriebsscheibe und der dem einen Schließkörper zugeordneten Abtriebsscheibe versetzt. Zum Versetzen der Kupplung in die Auskoppelstellung wird die Kuppelscheibe vorzugsweise aus der gemeinsamen Ebene heraus, insbesondere in Normalenrichtung zur gemeinsamen Ebene, versetzt. Besonders bevorzugt sind die Kuppelscheibe, die Antriebsscheibe und die dem einen Schließkörper zugeordnete Abtriebsscheibe in Radialrichtung der Antriebsscheibe derart zueinander angeordnet, insbesondere in einer gemeinsamen Ebene angeordnet, dass die Kupplung allein durch Versetzen der Kuppelscheibe entlang einer Längsachse, insbesondere entlang der Rotationsachse der Abtriebsscheibe, in Einkoppelstellung und in Auskoppelstellung versetzt werden kann. Dabei ist insbesondere der Abstand zwischen Antriebsscheibe und Abtriebsscheibe auf den Durchmesser der der Abtriebsscheibe zugeordnete Kuppelscheibe angepasst.

Besonders vorteilhaft an der Verwendung eines Kuppelgliedes, insbesondere einer Kuppelscheibe, ist, dass dadurch die Antriebsscheibe und/oder die jeweilige Abtriebsscheibe in Radial- und Axialrichtung ortsfest befestigt werden kann.

Als besonders vorteilhaft hat sich die Verwendung eines elektromagnetischen Kuppelantriebs herausgestellt. Vorzugsweise weist der Kuppelantrieb einen elektrisch betriebenen Magneten und einen in dem dabei entstehenden elektrischen Feld beweglich gelagerten magnetischen Anker auf. Der Anker ist vorzugsweise Kraftübertragung mit der Kuppelscheibe befestigt. Dafür weist die Kuppelscheibe vorzugsweise einen Lagerschaft auf, der sich vorzugsweise entlang der Rotationsachse der Kuppelscheibe erstreckt und insbesondere formschlüssig an dem Anker befestigt ist. Der Anker und/oder der Lagerschaft der Kupplung sind vorzugsweise beweglich entlang der Rotationsachse der Kuppelscheibe und/oder der Antriebsscheibe und/oder der Abtriebsscheibe gelagert.

Besonders vorteilhaft weist jede der wenigstens einen Kupplung einen eigenen Kuppelantrieb auf, um jede Kupplung unabhängig von der anderen in Einkoppelstellung und in Auskoppelstellung versetzen zu können. Es hat sich überraschenderweise herausgestellt, dass der zusätzliche Bauraumbedarf für die separaten Kuppelantriebe derart von der dadurch erzielten erhöhten Flexibilität hinsichtlich der möglichen Schaltstellungen und der erhöhten Flexibilität bezüglich der Anordnung der Fluideingänge und der Fluidausgänge kompensiert wird, dass der Bauraumbedarf für das gesamte Leitungssystem reduziert werden kann.

Gemäß einer Weiterbildung der vorliegenden Erfindung weist die wenigstens eine Kupplung ein Federelement auf, das in der Einkoppelstellung oder der Auskoppelstellung eine Rückstallkraft für ein Verfahren der Kupplung, insbesondere einer Kuppelscheibe der Kupplung, in die jeweils andere Stellung bereitstellt. Besonders bevorzugt ist das Federelement als Spiralfeder ausgebildet. Ferner stellt das Federelement vorzugsweise eine Federkraftkomponente parallel zur Stellrichtung des Kuppelantriebs bereit. Vorzugsweise wirken das Federelement und der Kuppelantrieb in entgegengesetzte Richtung. Dadurch kann insbesondere die Komplexität und somit auch die Kosten für den Kuppelantrieb reduziert werden, da dieser die Kupplung lediglich in eine Richtung, beispielsweise hin zur Einkoppelstellung, antreiben muss, während das Stellen in die andere Richtung, beispielsweise hin zur Auskoppelstellung, durch das Federelement erfolgt. Das Stellen über das Federelement kann insbesondere über Abstellen des Antriebs erfolgen, sodass die Rückstellkraft des Federelementes die Kupplung in die jeweilige Stellung treibt. Vorzugsweise erstreckt sich das Federelement in einer dafür vorgesehenen Federelementaufnahme in dem Lagerschaft der Kuppelscheibe und/oder um den Lagerschaft der Kuppelscheibe herum.

Gemäß einer Weiterbildung der vorliegenden Erfindung ist die wenigstens eine Kupplung derart ausgestaltet, dass die wenigstens zwei Schließkörper gleichzeitig dem Antrieb gekoppelt werden können. Dies wird vorzugsweise dadurch erreicht, dass die Einkoppelstellung bzw. die Auskoppelstellung durch Stellen eines Kuppelgliedes, wie einer Kuppelscheibe, hergestellt wird. In einer alternativen Ausführungsform könnte jedoch auch die Abtriebsscheibe selbst über die Kupplung verlagert werden, um die Einkoppelstellung bzw. die Auskoppelstellung herzustellen.

Gemäß einer Weiterbildung der vorliegenden Erfindung weist die Stellventilanordnung je Schließkörper jeweils eine der wenigstens einen Kupplung auf, wobei die Kupplungen den Schließkörpern vorzugsweise derart zugeordnet sind, dass die wenigstens zwei Schließkörper unabhängig voneinander mit dem Antrieb gekoppelt und entkoppelt werden können.

Es sei klar, dass jede der Kupplungen gemäß einer oder mehrerer der zuvor und nachfolgend beschriebenen vorteilhaften Ausgestaltungen und Anordnungen der wenigstens einen Kupplung ausgestaltet sein kann.

Vorzugsweise ist jedem Schließkörper jeweils eine Kupplung zugeordnet. Dabei weist vorzugweise jede Kupplung eine Kuppelscheibe auf, über die der Antrieb mit dem jeweiligen Schließkörper gekoppelt und entkoppelt werden kann. Zur Einstellung der Einkoppelstellung zwischen dem jeweiligen Schließkörper und dem Antrieb verfährt dabei die Kuppelscheibe vorzugsweise in eine Stellung, in der sie in Eingriff mit der dem jeweiligen Schließkörper zugeordneten Abtriebsscheibe und der Antriebsscheibe steht. Dabei sind die Kuppelscheiben vorzugsweise jeweils über separate Kuppelantriebe stellbar, sodass die Kupplungen unabhängig voneinander in Einkoppelstellung und in Auskoppelstellung versetzt werden können.

Vorzugsweise sind die Kupplungen, insbesondere die Kuppelscheibe, jeweils zwischen der Antriebsscheibe und der dem jeweiligen Schließkörper zugeordneten Abtriebsscheibe angeordnet.

Gemäß einer Weiterbildung der vorliegenden Erfindung weist die Stellventilanordnung wenigstens drei oder vier der wenigstens zwei Schließkörper auf, wobei vorzugsweise die wenigstens drei oder vier Schließkörper insbesondere in äquidistant Abständen zueinander um den Antrieb, insbesondere um die Rotationsachse einer Antriebsscheibe des Antriebs, herum angeordnet sind.

Es sei klar, dass vorzugsweise jeder der wenigstens drei oder vier Schließkörper gemäß einer oder mehrerer der zuvor beschriebenen bevorzugten Ausführungsformen und/oder Anordnungen der wenigstens zwei Schließkörper ausgebildet sein kann. Insbesondere ist vorzugsweise jeder der Schließkörper als scheibenförmiger Drehschieber ausgebildet, wobei insbesondere die den Schließkörper zugeordneten Abtriebsscheiben als die Drehschieber umlaufende Zahnkränze ausgebildet sind. Vorzugsweise ist jeder der Schließkörper von der Abtriebsscheibe beabstandet. Insbesondere erstrecken sich die wenigstens drei oder vier der wenigstens zwei Schließkörper in einer gemeinsamen Ebene, insbesondere in einer gemeinsamen Ebene mit einer Antriebsscheibe des Antriebs. Die Normale der gemeinsamen Ebene wird insbesondere durch die Rotationsachse der Abtriebsscheibe gebildet. Vorzugsweise sind die wenigstens drei oder vier Schließkörper in gleichen Abständen zueinander und/oder in gleichen Abständen zu dem Antrieb, insbesondere zu der Abtriebsscheibe, angeordnet.

In einer bevorzugten Ausführungsform der vorliegenden Erfindung ist jedem der wenigstens drei oder vier Schließkörper jeweils eine der wenigstens einen Kupplung zugeordnet. Die Kupplungen, insbesondere jeweils eine Kuppelscheibe einer Kupplung, sind in insbesondere äquidistant Abständen zueinander um den Antrieb, insbesondere um die Rotationsachse einer Antriebsscheibe des Antriebs, herum angeordnet. Vorzugsweise weist jede der Kupplungen eine Kuppelscheibe auf, die in der Einkoppelstellung in Eingriff mit der Antriebsscheibe und der jeweiligen Abtriebsscheibe ist. Besonders bevorzugt erstrecken sich sämtliche Kuppelscheiben in Einkoppelstellung der Kupplung in einer gemeinsamen Ebene mit der Antriebsscheibe und der jeweiligen Abtriebsscheibe.

Gemäß einer vorteilhaften Ausführungsform sind die Kupplungen, insbesondere Kuppelscheiben der Kupplungen, jeweils zwischen dem Antrieb, insbesondere der Abtriebsscheibe, und dem Schließkörper, dem die jeweilige Kupplung zugeordnet ist, angeordnet. Insbesondere sind die jeweiligen Kuppelscheiben zwischen der Abtriebsscheibe, der sie zugeordnet sind, und der Antriebsscheibe angeordnet. Vorzugsweise erstrecken sich die Rotationsachsen der Antriebsscheibe, der Abtriebsscheiben und der Kuppelscheiben parallel zueinander. Besonders bevorzugt sind die Rotationsachsen der Kuppelscheiben in Umfangsrichtung um die Rotationsachse der Antriebsscheibe alternierend zu den Rotationsachsen der Abtriebsscheiben angeordnet. Vorzugsweise weisen die Kuppelscheiben zueinander einen konstanten Winkelversatz um die Rotationsachse der Antriebsscheibe auf. Alternativ oder zusätzlich weisen die Abtriebsscheiben vorzugsweise einen konstanten Winkelversatz um die Rotationsachse der Antriebsscheibe auf. Besonders bevorzugt weisen die Kuppelscheiben in Umfangsrichtung um die Rotationsachse der Abtriebsscheibe einen Winkelversatz gegenüber den Abtriebsscheiben auf, denen sie zugeordnet sind, insbesondere sodass der Abstand zwischen den Antriebsscheiben und der Abtriebsscheibe reduziert werden kann. Besonders bevorzugt beträgt der Winkelversatz zwischen einer Kuppelscheibe und der ihr zugeordneten Abtriebsscheibe die Hälfte des Winkelvorsatzes zwischen zwei in Umfangsrichtung benachbarten Kuppelscheiben und/oder Abtriebsscheiben.

Gemäß einer Weiterbildung der vorliegenden Erfindung ist der jeweils wenigstens eine Durchflussweg durch jeweils einen Fluideingang und einen Fluidausgang eines den jeweiligen Schließkörper umschließenden Gehäuses gebildet, wobei vorzugsweise das Gehäuse jeden der wenigstens zwei Schließkörper und/oder eine Antriebsscheibe des Antriebs und/oder eine oder jede Kuppelscheibe der wenigstens einen Kupplung umschließt.

Vorzugsweise ist jeder der Schließkörper durch zwei Gehäusehälften, insbesondere durch eine Aufnahmegehäusehälfte und eine Deckelgehäusehälfte, umschlossen, insbesondere fluiddicht gegenüber der Umgebung abgedichtet. Vorzugsweise weist eine Aufnahmegehäusehälfte wenigstens zwei Schließkörperaufnahmen, vorzugsweise wenigstens drei oder vier Schließkörperaufnahmen, zur Aufnahme der wenigstens zwei, vorzugsweise der wenigstens drei oder vier, Schließkörper auf. Besonders bevorzugt sind die Schließkörperaufnahmen jeweils scheibenförmig, insbesondere formkomplementär zu den Schließkörpern, ausgebildet. Ferner weist die Aufnahmegehäusehälfte vorzugsweise eine Antriebsscheibenaufnahme zur Aufnahme de Antriebsscheibe auf. Besonders bevorzugt ist die Antriebsscheibenaufnahme mittig zwischen den Schließkörperaufnahmen in die Aufnahmegehäusehälfte eingebracht. Alternativ oder zusätzlich ist vorzugsweise wenigstens eine Kuppelscheibenaufnahme, besonders bevorzugt wenigstens zwei, drei oder vier Kuppelscheibenaufnahmen, in einer der Gehäusehälften, insbesondere in der Aufnahmegehäusehälfte, ausgebildet. Besonders bevorzugt sind die Kuppelscheibenaufnahmen, die Antriebsscheibenaufnahme und die Schließkörperaufnahmen in einer Ebene angeordnet, sodass die Antriebsscheibe, die Kuppelscheiben und die Schließkörper in einer Ebene insbesondere in der Aufnahmegehäusehälfte angeordnet werden können.

Besonders bevorzugt sind die Schließkörperaufnahmen, die Antriebsscheibenaufnahme und die Kuppelscheibenaufnahmen der Aufnahmegehäusehälfte entsprechend der zuvor und nachfolgend beschriebenen bevorzugten Ausführungsformen und Anordnungen der Schließkörper ausgestaltet.

Besonders bevorzugt ist eine Dichtung vorgesehen, die die Schließkörper, die Antriebsscheibe und die Kuppelscheiben innerhalb der Aufnahmegehäusehälfte umläuft, insbesondere kleeblattartig umläuft und dabei insbesondere sämtliche Bauteile, insbesondere die Antriebsscheibe, die Kuppelscheiben und die Schließkörper, über eine Dichtung gegenüber der Umgebung abdichtet.

Vorzugsweise wird die Aufnahmegehäusehälfte durch eine Deckelgehäusehälfte gegenüber der Umgebung geschlossen.

Zur Bildung eines Durchflussweges ist vorzugsweise ein Fluideingang an einer Gehäusehälfte und ein Fluidausgang an der anderen Gehäusehälfte angebracht. Der Fluideingang eines Durchflussweges ist vorzugsweise jeweils über eine Schließkörperaufnahme in dem Gehäuse fluidal mit dem dazugehörigen Fluidausgang gekoppelt, sodass insbesondere ein Durchflussweg durch die Schließkörperaufnahmen verläuft. Besonders bevorzugt ist der jeweiligen Schließkörper dazu als Drehschieber mit einer Durchlassaussparung ausgebildet, sodass durch Positionieren der Durchlassaussparung zwischen einem Fluideingang und einem Fluidausgang der Durchflussweg freigegeben wird. Vorzugsweise sind jeweils wenigstens zwei, drei oder vier Fluideingänge und/oder Fluidausgänge pro Gehäusehälfte und Schließkörper vorgesehen, sodass vorzugweise wenigstens zwei, drei oder vier Durchflusswege pro Schließkörper bereitgestellt werden können. Bei einer bevorzugten Ausführungsform von beispielsweise vier Schließkörpern und jeweils vier Durchflusswege je Schließkörper können somit bis zu 16 Durchflusswege versperrt und freigegeben werden.

Bei einer vorteilhaften Ausführungsform mit entsprechend vier Kupplungen, über die jeder der wenigstens vier Schließkörper separat mit dem Antrieb gekoppelt und entkoppelt werden kann, können jeweils vier Gruppen von jeweils vier Durchflusswegen separat voneinander eingestellt werden. Insbesondere durch die Verwendung von kreisabschnittsförmigen, insbesondere nierenförmigen, Durchlassaussparungen können darüber hinaus einzelne oder mehrere Durchflusswege über einen Schließkörper gleichzeitig oder getrennt versperrt und freigegeben werden.

Gemäß einer bevorzugten Ausführungsform der vorliegenden Erfindung sind der Fluideingang und der Fluidausgang wenigstens eines Durchflussweges derart zueinander fluchtend ausgebildet, dass wenigstens einer der wenigstens zwei Fluidströme den Durchflussweg im Wesentlichen umlenkungsfrei durchströmen kann. Unter dem Fluchten des Fluideingangs zu dem Fluidausgang ist insbesondere zu verstehen, dass wenigstens 30 %, 70 %, 90 % oder 95 % des Durchtrittsquerschnitts des Fluideingangs in dem Gehäuse sich mit dem Durchtrittsquerschnitt des Fluidausgangs in dem Gehäuse schneiden. Unter im Wesentlichen umlenkungsfrei ist insbesondere zu verstehen, dass wenigstens 30 %, 70 %, 90 % oder 95 % des einen der wenigstens zwei Flugströme den Durchflussweg durchströmen kann, ohne zwischen dem Fluideingangs und dem Fluidausgang des Gehäuses umgelenkt zu werden. Besonders bevorzugt sind die Fluideingänge und die Fluidausgänge von wenigstens zwei, drei oder vier Durchflusswegen zueinander derart fluchtend ausgebildet, dass die jeweiligen Fluidströme den jeweiligen Durchflussweg im Wesentlichen umlegungsfrei durchströmenden können.

Bevorzugte Ausführungen der Erfindung sind in den Unteransprüchen angegeben. Weitere Vorteile, Merkmale und Eigenschaften der Erfindung werden durch die folgende Beschreibung bevorzugter Ausführungen der beiliegenden Zeichnungen erläutert, in denen zeigen:
- Figur 1: eine perspektivische Ansicht auf eine erfindungsgemäße Stellventilanordnung;
- Figur 2: eine vergrößerte Ansicht der in Figur 1 dargestellten Antriebsscheibe, der Kuppelscheiben und der Abtriebsscheiben;
- Figur 3: eine Schnittdarstellung der Stellventilanordnung aus Figur 1 mit Deckelgehäusehälfte;
- Figur 4: eine Kupplung in Einkoppelstellung;
- Figur 5: die Kupplung aus Figur 4 in Auskoppelstellung
- Figur 6: eine perspektivische Ansicht auf eine Aufnahmegehäusehälfte einer erfindungsgemäßen Stellventilanordnung; und
- Figur 7: eine perspektivische Ansicht auf eine Deckelgehäusehälfte einer erfindungsgemäßen Stellventilanordnung.

Stellventilanordnungen werden folgend mit der Bezugsziffer 1 versehen. Gleicher oder ähnlicher Bauteile werden für eine vereinfachte Übersicht mit gleichen oder ähnlichen Bezugsziffern versehen.

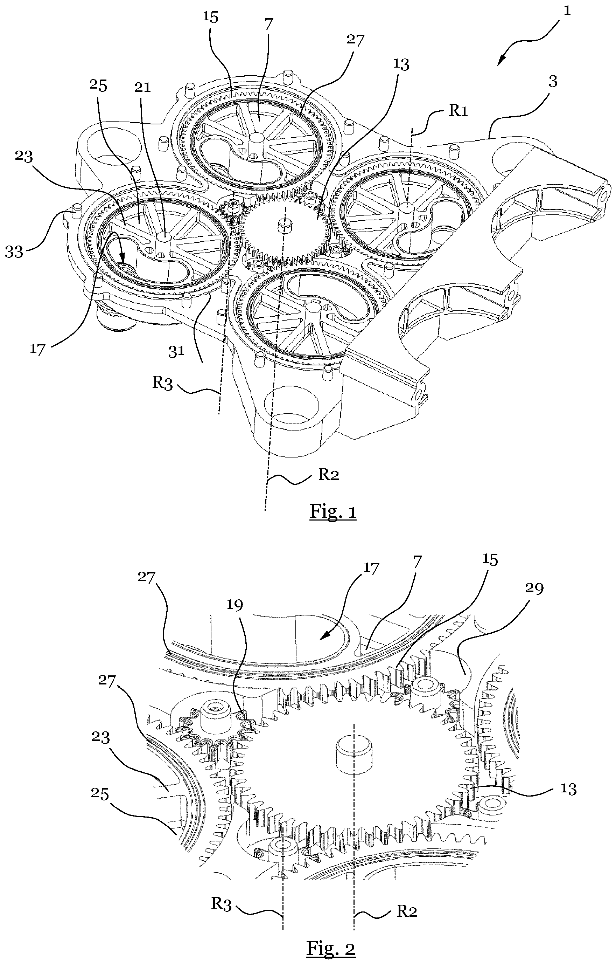

Figur 1 zeigt eine perspektivische Ansicht auf eine Stellventilanordnung 1, wobei eine Gehäusehälfte 5 zur Darstellung des Innenlebens der Stellventilanordnung 1 ausgeblendet ist.

Darin ist eine Stellventilanordnung 1 zum Einstellen von wenigstens zwei Fluidströmen, insbesondere von wenigstens zwei Kühlflüssigkeitsströmen, in einem Leitungssystem insbesondere eines Kraftfahrzeugs, wie eines elektrisch angetriebenen Kraftfahrzeugs dargestellt. Diese umfasst vier Schließkörper 7 zum Versperren und Freigeben von jeweils wenigstens einem Durchflussweg, einen Antrieb 9 zum Stellen der Schließkörper 7 und vier Kupplungen 11 mit jeweils einer Einkoppelstellung, in der der Antrieb 9 mit einem der Schließkörper 7 kraftübertragend gekoppelt ist, und jeweils einer Auskoppelstellung, in der der Antrieb 9 von dem jeweiligen Schließkörper 7 entkoppelt ist.

Der Antrieb 9 weist eine Antriebsscheibe 13 in Form eines Antriebszahnrades 13 auf. Die vier Schließkörper 7 sind als Drehschieber 7 ausgebildet. Den Drehschiebern ist jeweils eine Abtriebsscheibe 15 in Form eines den jeweiligen Drehschieber umlaufenden Zahnkranzes 15 zugeordnet, über die der Antrieb 9 die Schließkörper 7 stellt. In der hier dargestellten bevorzugten Ausführungsform sind die als Drehschieber 7 ausgebildeten Schließkörper 7 einstückig mit den als Zahnkranz 15 ausgebildeten Abriebscheiben 15 ausgebildet. Dabei bilden der Drehschieber 7 und der Zahnkranz 15 eine Bauteilunion in Form eines Abtriebszahnrades 7, 15. Bei der bevorzugten Ausführungsform der Abtriebszahnräder 7, 15 bildet die Außenkontur des Abtriebszahnrades 7, 15 die Abtriebsscheibe 15 in Form eines Zahnkranzes, während der innenliegende scheibenförmige Grundkörper den Schließkörper 7 in Form eines Drehschiebers 7 bildet.

In die Drehschieber 7 ist jeweils eine Durchlassaussparung 17 eingebracht, durch die ein freigegebener Fluidstrom durchströmen kann. Die Durchlassaussparungen 17 durchdringen den Drehschieber 7 in Richtung der Rotationsachse R1 des Drehschiebers 7 vollständig. In Radialrichtung und Umfangsrichtung zur Rotationsachse R1 des Drehschieber 7 erstreckt sich die Durchlassaussparung 17 vorzugsweise ringabschnittsförmig, insbesondere nierenförmig. Insbesondere erstreckt sich die Durchlassaussparung 17 zwischen der Rotationsachse R1 und dem Zahnkranz 15 eines Drehschiebers 7.

Die Kupplungen 11 weisen jeweils eine Kuppelscheibe 19 in Form eines Kuppelzahnrades 19 auf, die in der Einkoppelstellung jeweils in direktem Eingriff mit dem Antriebszahnrad 13 und dem jeweiligen Zahnkranz 15 eines Drehschiebers 7 steht. In Figur 2 ist oben links ein Kuppelzahnrad 19 in direktem Eingriff mit dem Antriebszahnrad 13 und dem Zahnkranz 15 dargestellt. In der Einkoppelstellung erstrecken sich das Antriebszahnrad 13, das Kuppelzahnrad 19 und das Abtriebszahnrad 15 in einer Ebene, wobei die Ebene die Rotationsachse R2 des Antriebszahnrades 13 als Normale aufweist. Im direkten Eingriff eines Kuppelzahnrades 19 mit einem Antriebszahnrad 13 und mit einem Abtriebszahnrad 15 kämmt das Kuppelzahnrad 19 das Abtriebszahnrades 15 und das Antriebszahnrad 13.

Die anderen drei in Figur 2 dargestellten Kuppelzahnräder 19 befinden sich in Auskoppelstellung, in der die Kuppelzahnräder 19 gegenüber der gemeinsamen Ebene des Antriebszahnrades 13 und des Abtriebszahnrades 15 entlang der Rotationsachse R3 der Kuppelzahnräder 19 versetzt sind.

Wie insbesondere Figur 2 zu entnehmen ist, erstrecken sich die Zahnkränze 15 der Drehschieber 7 unabhängig von der Stellung der jeweiligen Kupplung in einer Ebene mit dem Antriebszahnrad 13. Insbesondere sind das Antriebszahnrad 13 und die Drehschieber 7 in Radialrichtung und in Axialrichtung ortsfest in der Stellventilanordnung 1 befestigt. Wie insbesondere in Figur 2 zu sehen, ist in Radialrichtung des Antriebszahnrades vorzugsweise ein Abstand zwischen der Antriebsscheibe 13 und der Abtriebsscheibe 15 vorgesehen, der durch versetzen der Kuppelscheibe 19 in Einkoppelstellung überbrückt werden kann.

Die vier Drehschieber 7 sind in äquidistanten Abständen zueinander um das Antriebszahnrad 13, insbesondere um die Rotationsachse R2 des Antriebszahnrades 13, herum angeordnet. Insbesondere sind zwei sich diagonal gegenüberliegende Drehschieber 7 derart angeordnet, dass eine Verbindungslinie zwischen den zwei Rotationsachsen R1 der diagonal gegenüberliegenden Drehschieber 7 die Rotationsachse R2 des Antriebszahnrades 13 schneidet.

Die Kuppelzahnräder 19 sind in äquidistanten Abständen zueinander um das Antriebszahnrad 13, insbesondere um die Rotationsachse R2 des Antriebszahnrades 13 angeordnet. Insbesondere sind jeweils zwei sich diagonal gegenüberliegende Kuppelzahnräder 19 derart angeordnet, dass eine Verbindungslinie zwischen den Rotationsachsen R3 der sich jeweils diagonal gegenüberliegenden Kuppelzahnräder 19 die Rotationsachse R2 des Antriebszahnrades 13 schneidet. Insbesondere sind die Rotationsachsen R3 der Kuppelzahnräder 19 in Umfangsrichtung um die Rotationsachse des Antriebszahnrades 13 gegenüber den Rotationsachsen R1 der Drehschieber 7 versetzt. Vorzugsweise beträgt der Versatz zwischen den Rotationsachse R3 der Kuppelzahnräder 19 und den Rotationsachse R1 der Drehschieber 7 in Umfangsrichtung um die Rotationsachse R2 des Antriebszahnrades 13 die Hälfte des Versatzes der Rotationsachsen R1 von nebeneinander angeordneten Drehschiebern 7 in Umfangsrichtung um die Rotationsachse des Antriebszahnrades 13.

Die Drehschieber 7 sind drehbar um ihre Rotationsachse R1 gelagert. Hierfür weisen die Drehschieber 7 vorzugsweise eine Drehlageraufnahme 21 auf, über welche die Drehschieber 7 drehbar gegenüber dem Gehäuse 3,5 der Stellventilanordnung 1 befestigt werden kann. Hierfür ist die Drehlageraufnahme 21 vorzugsweise als insbesondere einseitig geschlossener Hohlzylinder ausgebildet, über den der Drehschieber 7 an eine Drehlagerwelle (nicht dargestellt) in dem Gehäuse 3, 5 der Stellventilanordnung 1 befestigt werden kann. In Radialrichtung des Drehschiebers erstrecken sich vorzugsweise Versteifungsstreben 23 zwischen der Drehlageraufnahme 21 und dem Zahnkranz 15. Wenigstens eine Stirnseite des Drehschiebers 7 ist vorzugsweise durch eine Absperrscheibe 25 geschlossen, um Durchflusswege versperren zu können. Vorzugsweise gehen die Versteifungsstreben 23 in Richtung der Rotationsachse R1 der Drehschieber 7 in die Absperrscheibe 25 über. Um wenigstens einen Durchflussweg durch einen Drehschieber 7 bereitstellen zu können, werden die Versteifungsstreben 23 und/oder die Absperrscheibe 25 durch die Durchlassaussparung 17 in Richtung der Rotationsachse R1 der Drehschieber 7 durchbrochen.

Vorzugsweise sind der Zahnkranz 15 eines Drehschiebers 7 und die Durchlassaussparung 17 eines Drehschiebers 7 durch den Drehschieber 7 umlaufende Nuten und/oder Stege 27 getrennt. Die Nuten und/oder Stege 27 dienen insbesondere der Abdichtung des Zahnkranzes 15 von Fluiden, die den jeweiligen Drehschieber 7 durchströmenden können. Hierfür erstrecken sich die Nuten und/oder Stege 27 vorzugsweise an beiden Stirnseiten der Drehschieber 7. Insbesondere umlaufen die Nuten und/oder Stege den Drehschieber 7 in Radialrichtung jeweils vor dem Zahnkranz 15 des Drehschiebers. Insbesondere erstrecken sich die Nuten und/oder Stege 27 in Radialrichtung auf einer radialen Höhe, die wenigstens 50%, 70 %, 80 % oder 90 % der Radialerstreckung der Drehschieber 7 entspricht.

Wie insbesondere Figur 1 zu entnehmen, sind die Drehschieber 7 vorzugsweise in einer Aufnahmegehäusehälfte 3 angeordnet. Insbesondere ist in der Aufnahmegehäusehälfte 3 jeweils eine Schließkörperaufnahme 63 in Form einer Drehschieberaufnahme vorgesehen, in die der Drehschieber 7 eingesetzt werden kann. Die Drehschieberaufnahmen sind in äquidistanten Abständen zueinander um die Rotationsachse R2 des Antriebszahnrades 13 angeordnet. Besonders bevorzugt weist die Aufnahmegehäusehälfte 3 ferner eine Antriebsscheibenaufnahme in Form einer Antriebszahnradaufnahme auf, in der das Antriebszahnrad 13 in der Aufnahmegehäusehälfte 3 angeordnet werden kann. Besonders bevorzugt sind die Drehschieberaufnahmen und die Antriebszahnradaufnahme derart ausgestaltet, dass das Antriebszahnrad und die Drehschieber sich in einer Ebene erstrecken können. Vorzugsweise sind in der Aufnahmegehäusehälfte ferner Kuppelscheibenaufnahmen in Form von Kuppelzahnradaufnahmen vorgesehen, in die die Kuppelzahnräder 19 eingesetzt werden können. Insbesondere sind die Kuppelzahnradaufnahmen in Richtung der Rotationsachse R3 der Kuppelzahnräder 19 derart ausgestaltet, dass die Kuppelzahnräder 19 entlang ihrer Rotationsachse R3 versetzt werden können. Ferner weist die Aufnahmegehäusehälfte 3 vorzugsweise eine Dichtmittelaufnahme zum Aufnehmen eines Dichtmittels 31 auf, über das die Aufnahmen für die Drehschieber, die Kuppelzahnräder und das Antriebszahnrad gegenüber der Umgebung abgedichtet werden können. Die Dichtung 31 umschließt vorzugsweise das Antriebszahnrad 13, die Drehschieber 7 und die Kuppelzahnräder 19 in Umfangsrichtung zu den jeweiligen Rotationsachsen R1, R2 und R3.

In Radialrichtung außerhalb des Dichtmittels 31 sind vorzugsweise Verbindungsmittel 33, wie Schrauben und Nieten, angeordnet über die die Aufnahmegehäusehälfte 3 mit der Deckelgehäusehälfte 5 befestigt werden kann.

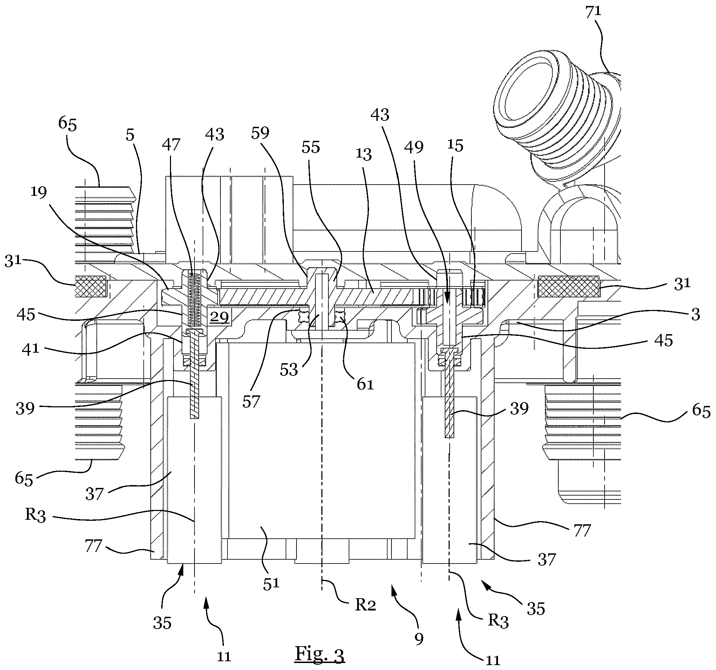

Figur 3 zeigt eine Teilquerschnittsansicht der erfindungsgemäßen Stellventilanordnung 1 aus Figur 1 mit eingeblendeter Deckelgehäusehälfte 5. Die Drehschieber 7 sind in Figur 3 nicht dargestellt. Lediglich ein Teil eines Zahnkranzes 15 eines Drehschiebers 7 ist hinter dem in Figur 3 rechten Kuppelzahnrad 19 zu sehen.

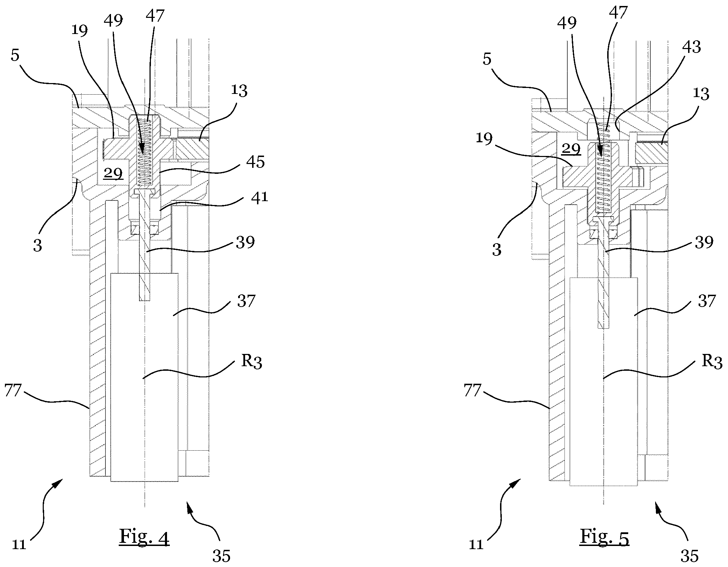

In Figur 3 sind der Antrieb 9 und zwei Kupplungen 11 dargestellt. Die linke Kupplung 11 befindet sich in Einkoppelstellung. Die rechte Kupplung befindet sich in Auskoppelstellung. Figur 4 zeigt eine Vergrößerung der Kupplung 11 aus Figur 3 in Einkoppelstellung. Figur 5 zeigt die Kupplung 11 aus Figur 4 in Auskoppelstellung. Die Kupplungen 11 umfassen jeweils einen Kuppelantrieb 35 in Form eines elektromagnetisch betriebenen Linearantriebs 35. Die Kuppelantriebe 35 umfassen jeweils einen Elektromagneten, insbesondere in Form einer Spule, zur Erzeugung eines magnetischen Feldes und einen Anker 39, der über den Elektromagneten 37 insbesondere linear gestellt werden kann. Über den Kuppelantrieb kann jeweils eine Kupplung 11 in Einkoppelstellung und in Auskoppelstellung versetzt werden. Insbesondere wird über den Kuppelantrieb 35 in Form eines Linearantriebes das Kuppelzahnrad 19 in Einkoppelstellung und in Auskoppelstellung versetzt. Hierfür ist das Kuppelzahnrad 19 jeweils kraftschlüssig, insbesondere formschlüssig, mit dem Kuppelantrieb 35, insbesondere mit dem Anker 39, verbunden. Vorzugsweise ist der Kuppelantrieb 35, insbesondere der Anker 39, fest mit dem Kuppelzahnrad 19 verbunden.

Das Kuppelzahnrad 19 ist drehbar gelagert, insbesondere drehbar in einer oder mehrerer Gehäusehälften 3, 5 der Stellventilanordnung 1 gelagert ist. Hierfür ist insbesondere in der Aufnahmegehäusehälfte 3 eine Drehlageraufnahme 41 vorgesehen, in der das Kuppelzahnrad 19 gelagert ist. Hierfür ist das Kuppelzahnrad 19 mit einem Lagerschaft 45 verbunden, der in der Drehlageraufnahme 41 der Aufnahmegehäusehälfte 3 gelagert ist. Der Lagerschaft 45 ist insbesondere einstückig mit dem Kuppelzahnrad 19 ausgebildet. Insbesondere ist der Lagerschaft 45 fest, insbesondere formschlüssig, mit dem Kuppelantriebe 35, insbesondere mit dem Anker 39 des Kuppelantriebs 35, verbunden. Durch Betätigen des Kuppelantriebs 35, wird insbesondere der Lagerschaft 45 innerhalb der Drehlageraufnahme 41 parallel zur Rotationsachse R3 des Kuppelzahnrades 19 gestellt.

Vorzugsweise kann ferner eine Drehlageraufnahme 43 in der Deckelgehäusehälfte 5 vorgesehen sein, über die das Kuppelzahnrad 19 in der Einkoppelstellung zusätzlich gelagert wird. Hierfür kann sich der Lagerschaft 45 des Kuppelzahnrades 19 vorzugsweise von beiden Stirnseiten des Kuppelzahnrades 19 jeweils in die entgegengesetzte Richtung entlang der Rotationsachse R3 des Kuppelzahnrades 19 erstrecken.

Eine oder mehrere der Kupplungen 11 kann ein Federelement 47 aufweisen, dass in der Einkoppelstellung oder in der Auskoppelstellung eine Rückstallkraft für ein Versetzen der Kupplung, insbesondere eines Kuppelzahnrades 19 der Kupplung 21, in die jeweils andere Stellung bereitstellt. In Figur 4 und 5 ist ein derartiges Federelement beispielhaft in Form einer Spiralfeder dargestellt. In der in Figur 4 dargestellten Einkoppelstellung ist die Spiralfeder komprimiert, sodass sie eine Rückstallkraft für ein Versetzen des Kuppelzahnrades 19 in die andere Stellung, hier in die Auskoppelstellung, bereitstellt. In der hier dargestellten vorteilhaften Ausführungsform, ist zur Aufnahme des Federelementes 47 eine Federelementaufnahme 49 eingebracht, in der das Federelement 47 gelagert werden kann. Dabei stützt sich das Federelement 47 einerseits an den Boden der Federelementaufnahme 49 und andererseits in der Drehlageraufnahme 43 der Deckelgehäusehälfte 5 ab.

Es sei klar, dass auch andere Anordnungen des Federelementes, beispielsweise zwischen dem Kuppelzahnrad 13 und der Drehlageraufnahme 43 der Aufnahmegehäusehälfte 3, denkbar sind. Ferner ist es auch denkbar das Federelement derart zu gestalten, dass die Rückstallkraft für ein Versetzen der Kupplung aus der Auskoppelstellung in die Einkoppelstellung bereitgestellt wird.

Wie insbesondere Figur 3 zu entnehmen, ist die Kuppelzahnradaufnahme 29 derart tief in Richtung der Rotationsachse R3 der Kuppelzahnräder 19 ausgestaltet, dass das Kuppelzahnrad 19 parallel zur Rotationsachse R3 des Kuppelzahnrades 19 versetzt werden kann.

Durch die dargestellte vorteilhafte Ausführungsformen, in der jede Kupplung 11 einen eigenen Kuppelantrieb 35 aufweist, kann jede Kupplung 11 unabhängig von den anderen Kupplungen 11 in Einkoppelstellung oder in Auskoppelstellung versetzt werden. Dadurch kann insbesondere jeder Drehschieber 7 unabhängig von den anderen Drehschiebern 7 mit dem Antrieb 9 gekoppelt und von diesen entkoppelt werden.

Der Antrieb 9 umfasst vorzugsweise eine Motor 51, insbesondere einen Getriebemotor, über den das Antriebszahnrad 13 angetrieben wird. Der Motor 51 treibt das Antriebszahnrad 13 über eine Motorabtriebswelle 53 an. Gegenüber dem Gehäuse 3, 5 der Stellventilanordnung 1 ist das Antriebszahnrad 13 über eine Drehlageraufnahme 57, 59 drehbar gelagert. Vorzugsweise ist in der Aufnahmegehäusehälfte 3 und der Deckelgehäusehälfte 5 jeweils eine Drehlageraufnahme 57, 59 zum drehbaren Lagern des Antriebszahnrades vorgesehen. Das Antriebszahnrad 13 weist einen Lagerschaft 55 auf, der sich vorzugsweise von beiden Stirnseiten des Antriebszahnrades 13 jeweils in entgegengesetzte Richtungen parallel zur Rotationsachse R2 des Antriebszahnrades 13 erstreckt. Der Lagerschaft 55 des Antriebszahnrades 13 ist vorzugsweise beidseitig in den Drehlageaufnahmen 57, 59 der Gehäusehälften 3, 5 gelagert. Der Lagerschaft 55 des Antriebszahnrades 13 weist innenseitig vorzugsweise eine Aufnahme zum kraftschlüssigen verbinden des Antriebszahnrad 13 mit der Motorabtriebswelle 53 auf. In Radialrichtung zur Rotationsachse R2 des Antriebszahnrades 13 ist vorzugsweise ein Dichtmittel, insbesondere ein Dichtring 61, zwischen dem Lagerschaft 55 des Antriebszahnrad 13 und einer Gehäusehälfte 3, 5 insbesondere der Aufnahmegehäusehälfte 3, angeordnet.

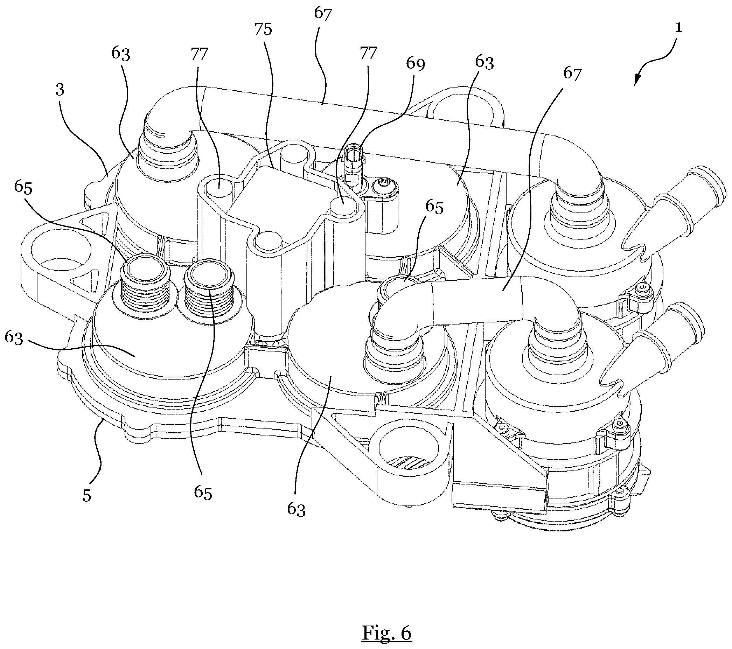

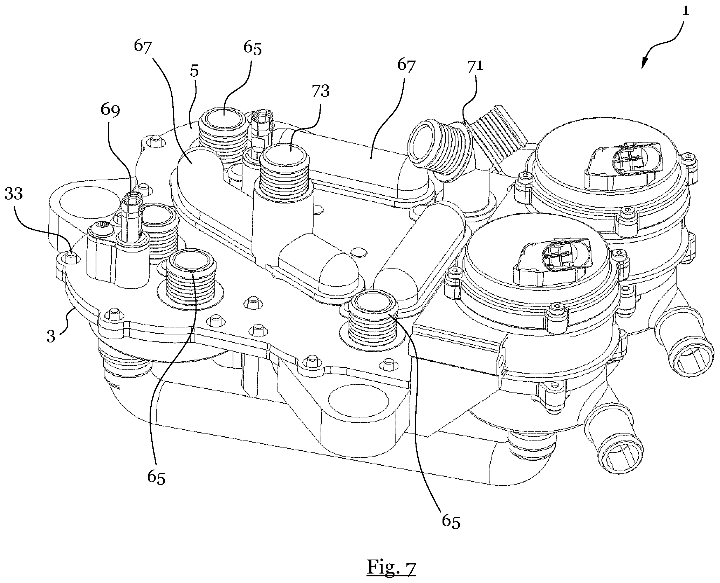

Figur 6 zeigt eine erfindungsgemäße Stellventilanordnung 1 in perspektivische Ansicht auf eine Aufnahmegehäusehälfte 3, während Figur 7 eine perspektivische Ansicht auf eine erfindungsgemäße Stellventilanordnung 1 auf eine Deckelgehäusehälfte 5 zeigt. Die zwei Gehäusehälften 3,5 sind über Verbindungsmittel 33, wie Schrauben oder Nieten, miteinander befestigt. Die Aufnahmegehäusehälfte 3 umfasst vier Schließkörperaufnahmen 63, in denen die Schließkörper 7, insbesondere in Form von Drehschiebern 7, aufgenommen sind. An die Schließkörperaufnahmen 63 schließen Fluideingänge und/oder Fluidausgänge 65 an. Ferner schließen Fluideingänge und/oder Fluidausgänge 65 an den den Schließkörperaufnahmen gegenüberliegenden Abschnitt der Deckelgehäusehälfte 5 an. Ein Durchflussweg wird insbesondere durch eine fluidale Verbindung zwischen einem Fluideingang 65 an einer Gehäusehälfte, beispielsweise an der Aufnahmegehäusehälfte 3, und einem Fluidausgang 65 an der anderen Gehäusehälfte, beispielsweise an der Deckelgehäusehälfte 5, gebildet. Vorzugsweise sind der Fluideingang 65 und der Fluidausgang 65 eines Durchflussweges derart zueinander fluchtend ausgebildet, dass ein den Durchflussweg durchströmender Fluidstrom diesen im Wesentlichen umlenkungsfrei durchströmen kann. Ein Beispiel für eine derartige Umlenkungsfreie Durchströmung ist am linken Ende von Figur 3 dargestellt, in der ein Fluideingang 65 mit einem Fluidausgang 65 fluchtet. Wie insbesondere Figur 6 entnommen werden kann, müssen nicht sämtliche Fluideingänge und/oder Fluidausgänge 65, die an die Stellventilanordnung 1 eingebracht sind mit Leitungen 67 des Leitungssystems verbunden sein. Vielmehr soll die erfindungsgemäße Stellventilanordnung 1 insbesondere flexibel für unterschiedliche Einsatzgebiete und/oder Anforderungsprofile sein. Dafür sind die Fluideingänge und/oder Fluidausgänge 65 insbesondere als Anschlüsse für Leitungen 67 ausgebildet, die entweder mit Leitungen 67 eines Leitungssystems verbunden werden können oder über Blindstopfen verschlossen werden können. Zur Ausbildung von Anschlüssen für Leitungen 67 können die Fluideingänge und/oder die Fluidausgänge 65 Gewinde aufweisen.

Ferner können an die Fluideingänge und/oder Fluidausgänge 65 unterschiedliche Leitungen 67, wie Reduzierleitungen 69, bei denen der Leitungsquerschnitt verkleinert wird, Verbindungsleitungen 71, bei denen mehrere Fluidströme in einen Fluidstrom überführt werden, und Aufteilleitungen 73, über die ein einzelner Fluidstrom in mehrere Fluidströme aufgeteilt wird.

Wie insbesondere Figur 6 zu entnehmen, weist eine der Gehäusehälften, insbesondere die Aufnahmegehäusehälfte 3, eine Motoraufnahme 75 für den Motor 51 des Antriebs 9 auf. Ferner weist vorzugsweise eine Gehäusehälfte, insbesondere die Aufnahmegehäusehälfte 3, separate Kupplungsantriebsaufnahmen 77 für die Kuppelantriebe 35 der Kupplungen 11 auf. Vorzugsweise sind die Motoraufnahme 75 und/oder die Kupplungsantriebsaufnahmen 77 jeweils einstückig mit einer Gehäusehälfte der Stellventilanordnung 1, insbesondere mit der Aufnahmegehäusehälfte 3, verbunden.

Die erfindungsgemäße Stellventilanordnung kann flexibel bei Leitungssystemen mit wechselnden Anforderungen oder für unterschiedliche Leitungssysteme eingesetzt werden. Die hohe Anzahl an zur Verfügung stehenden Durchflusswegen, die insbesondere durch den Einsatz der erfindungsgemäßen Kupplungen flexibel angesteuert werden können, ermöglicht dabei sowohl einen flexiblen Einsatz der Stellventilanordnung 1 als auch bauraumsparende Leitungssystem.

Die in der vorstehenden Beschreibung, den Figuren und den Ansprüchen offenbarten Merkmale können sowohl einzeln als auch in beliebiger Kombination für die Realisierung der Erfindung in verschiedenen Ausgestaltungen von Bedeutung sein.

### Bezugszeichenliste

- 1: Stellventilanordnung
- 3: Aufnahmegehäusehälfte
- 5: Deckelgehäusehälfte
- 7: Schließkörper/Drehschieber/Abtriebszahnrad
- 9: Antrieb
- 11: Kupplung
- 13: Antriebszahnrad/Antriebsscheibe
- 15: Abtriebsscheibe/Zahnkranz/Abtriebszahnrad
- 17: Durchlassaussparung
- 19: Kuppelzahnrad/Kuppelscheibe
- 21: Drehlageraufnahme des Drehschiebers
- 23: Versteifungsstreben
- 25: Absperrscheibe
- 27: Nuten und/oder Stege
- 29: Kuppelzahnradaussparungen
- 31: Dichtmittel
- 33: Verbindungsmittel
- 35: Kuppelantrieb
- 37: Elektromagnet
- 39: Anker
- 41: Drehlageraufnahme für die Kuppelzahnräder in der Aufnahmegehäusehälfte
- 43: Drehlageraufnahme für die Kuppelzahnräder in der Deckelgehäusehälfte
- 45: Lagerschaft des Kuppelzahnrades
- 47: Federelement
- 49: Federelementaufnahme
- 51: Motor
- 53: Motorabtriebswelle
- 55: Lagerschaft des Antriebszahnrades
- 57: Drehlageraufnahme für das Antriebszahnrad in der Aufnahmegehäusehälfte
- 59: Drehlageraufnahme für das Antriebszahnrad in der Deckelgehäusehälfte
- 61: Dichtringe
- 63: Schließkörperaufnahme
- 65: Fluideingänge und/oder Fluidausgänge
- 67: Leitung
- 69: Reduzierleitung
- 71: Verbindungsleitung
- 73: Aufteilleitung
- 75: Motoraufnahme
- 77: Kupplungsantriebsaufnahme
- R1: Rotationsachse der Drehschieber
- R2: Rotationsachse des Antriebszahnrad
- R3: Rotationsachse der Koppelzahnräder

## Patentansprüche

1. Stellventilanordnung (1) zum Einstellen von wenigstens zwei Fluidströmen, insbesondere von wenigstens zwei Kühlflüssigkeitsströmen, in einem Leitungssystem insbesondere eines Kraftfahrzeugs, wie eines elektrisch angetriebenen Kraftfahrzeugs, umfassend:
- wenigstens zwei Drehschieber (7) zum Versperren und Freigeben von jeweils wenigstens einem Durchflussweg;
- einen Antrieb (9) zum Stellen der wenigstens zwei Drehschieber;
- wenigstens eine Kupplung (11) mit einer Einkoppelstellung, in der der Antrieb (9) mit einem der wenigstens zwei Drehschieber (7) kraftübertragend gekoppelt ist, und einer Auskoppelstellung, in der der Antrieb (9) von dem einen der wenigstens zwei Drehschieber (7) entkoppelt ist, wobei
der Antrieb (9) eine Antriebsscheibe aufweist
**dadurch gekennzeichnet, dass**
den wenigstens zwei Drehschiebern jeweils eine sich entlang der Außenkontur der Drehschieber erstreckende Abtriebsscheibe zugeordnet ist, über die der Antrieb die wenigstens zwei Drehschieber stellt.

2. Stellventilanordnung (1) nach Anspruch 1, wobei die wenigstens zwei Drehschieber (7) als scheibenförmige Drehschieber (7) ausgebildet sind, die vorzugsweise jeweils wenigstens eine Durchlassaussparung (17) zum Freigeben des jeweils wenigstens einen Durchflussweges aufweisen.

3. Stellventilanordnung (1) nach Anspruch 1 oder 2, wobei die Antriebsscheibe ein Antriebszahnrad (13) ist und die Abtriebsscheiben (15) Zahnkränze sind.

4. Stellventilanordnung (1) nach Anspruch 3, wobei die Abtriebsscheiben (15) fest mit den Drehschiebern verbunden, insbesondere einstückig ausgebildet, sind, und/oder wobei die Abtriebsscheiben (15) vorzugsweise als die Drehschieber (7) umlaufende Zahnkränze ausgebildet sind.

5. Stellventilanordnung (1) nach Anspruch 3 oder 4, wobei die wenigstens zwei Drehschieber (7) jeweils in Bauteilunion mit den ihnen zugeordneten Antriebsscheibe (13) ausgebildet sind, wobei die Bauteilunion vorzugsweise durch jeweils ein Abtriebszahnrad (7) gebildet ist, wobei die Drehschieber (7) vorzugsweise jeweils durch die scheibenförmige Grundform des Abtriebszahnrades (7) gebildet sind und die den Drehschiebern jeweils zugeordneten Abtriebsscheiben (15) durch den den scheibenförmigen Grundkörper umlaufenden Zahnkranz gebildet sind.

6. Stellventilanordnung (1) nach einem der Ansprüche Anspruch 3 bis 5, wobei die Antriebsscheibe (13) und die Abtriebsscheiben (15) sich, insbesondere unabhängig von der Stellung der wenigstens einen Kupplung, in einer gemeinsamen Ebene erstrecken, wobei vorzugsweise die Rotationsachse (R2) der Antriebsscheibe (13) die Normale der gemeinsamen Ebene definiert.

7. Stellventilanordnung (1) nach einem der Ansprüche 3 bis 6, wobei die wenigstens eine Kupplung (11) eine Kuppelscheibe (19), insbesondere ein Kuppelzahnrad (19), aufweist, die vorzugsweise in der Einkoppelstellung in Eingriff, insbesondere in direktem Eingriff, mit der Antriebsscheibe (13) und der dem einen Drehschieber (7) zugeordneten Abtriebsscheibe (15) des einen Drehschiebers steht.

8. Stellventilanordnung (1) nach Anspruch 7, wobei sich die Kuppelscheibe (19) in der Einkoppelstellung in einer gemeinsamen Ebene mit der Antriebsscheibe (13) und der Abtriebsscheibe (15) des einen Drehschiebers erstreckt, und/oder wobei die Kuppelscheibe (19) in der Auskoppelstellung gegenüber einer gemeinsamen Ebene der Antriebsscheibe (13) und der Abtriebsscheibe (15) des einen Drehschiebers versetzt ist, wobei insbesondere die Rotationsachse (R2) der Antriebsscheibe (13) die Normale der gemeinsamen Ebene definiert.

9. Stellventilanordnung (1) nach einem der vorstehenden Ansprüche, wobei die wenigstens eine Kupplung (11) einen insbesondere als Linearantrieb ausgebildeten Kuppelantrieb (35), insbesondere einen elektromagnetischen Kuppelantrieb (35), aufweist, über den die Kupplung, insbesondere eine Kuppelscheibe (19) der Kupplung, in Einkoppelstellung und in Auskoppelstellung versetzt werden kann.

10. Stellventilanordnung (1) nach einem der vorstehenden Ansprüche, wobei die wenigstens eine Kupplung (11) eine Federelement (47) aufweist, das in der Einkoppelstellung oder in der Auskoppelstellung eine Rückstellkraft für ein Versetzen der Kupplung, insbesondere einer Kuppelscheibe (19) der Kupplung, in die jeweils andere Stellung bereitstellt.

11. Stellventilanordnung (1) nach einem der vorstehenden Ansprüche, wobei die Stellventilanordnung (1) je Drehschieber (7) jeweils eine der wenigstens einen Kupplung (11) aufweist, wobei die Kupplungen den Drehschiebern vorzugsweise derart zugeordnet sind, dass die wenigstens zwei Drehschieber (7) unabhängig voneinander mit dem Antrieb (9) gekoppelt und entkoppelt werden können.

12. Stellventilanordnung (1) nach einem der vorstehenden Ansprüche, wobei die Stellventilanordnung (1) wenigstens drei oder vier der wenigstens zwei Drehschieber (7) aufweist, wobei vorzugsweise die wenigstens drei oder vier Drehschieber (7) insbesondere in äquidistanten Abständen zueinander um den Antrieb, insbesondere um die Rotationsachse (R2) einer Antriebsscheibe (13) des Antriebs, herum angeordnet sind.

13. Stellventilanordnung (1) nach Anspruch 12, wobei jedem der wenigstens drei oder vier Drehschieber (7) jeweils eine der wenigstens einen Kupplung (11) zugeordnet ist, wobei vorzugsweise die Kupplungen, insbesondere jeweils eine Kuppelscheibe (19) einer Kupplungen, in insbesondere äquidistanten Abständen zueinander um den Antrieb, insbesondere um die Rotationsachse (R2) einer Antriebsscheibe (13) des Antriebs, herum angeordnet sind.

14. Stellventilanordnung (1) nach einem der vorstehenden Ansprüche, wobei der jeweils wenigstens eine Durchflussweg durch jeweils einen Fluideingang und einen Fluidausgang eines den jeweiligen Drehschieber (7) umschließenden Gehäuses gebildet ist, wobei vorzugsweise das Gehäuse jeden der wenigstens zwei Drehschieber (7) und/oder eine Antriebsscheibe (13) des Antriebs und/oder eine oder jede Kuppelscheibe (19) der wenigstens einen Kupplung (11) umschließt.

15. Stellventilanordnung (1) nach Anspruch 14, wobei der jeweils eine Fluideingang und eine Fluidausgang wenigstens eines Durchflussweges derart zueinander fluchtend ausbildet sind, dass wenigstens einer der wenigstens zwei Fluidströme den Durchflussweg im Wesentlichen umlenkungsfrei durchströmen kann.

## Claims

1. Control valve assembly (1) for adjusting at least two fluid flows, in particular of at least two cooling liquid flows, in a line system, in particular of a motor vehicle, such as an electrically driven motor vehicle, comprising:
- at least two rotary valves (7) for blocking and releasing at least one flow path each;
- a drive (9) for controlling the at least two rotary valves;
- at least one coupling (11) having an engaged position, in which the drive (9) is force-transmittingly coupled to one of the at least two rotary valves (7), and a disengaged position, in which the drive (9) is decoupled from the one of the at least two rotary valves (7), wherein
the drive (9) has a drive pulley
**characterized in that**
the at least two rotary valves are assigned a respective driven pulley extending along the outer contour of the rotary valves, via which the drive controls the at least two rotary valves.

2. Control valve assembly (1) according to claim 1, wherein the at least two rotary valves (7) are formed as disc-shaped rotary valves (7), which preferably respectively have at least one passage recess (17) for releasing the respective at least one flow path.

3. Control valve assembly (1) according to claim 1 or 2, wherein the drive pulley is a drive gear (13) and the driven pulleys (15) are gear rims.

4. Control valve assembly (1) according to claim 3, wherein the driven pulleys (15) are fixedly connected to the rotary valves, in particular formed in one piece, and/or wherein the driven pulleys (15) are preferably formed as gear rims encircling the rotary valves (7).

5. Control valve assembly (1) according to claim 3 or 4, wherein the at least two rotary valves (7) are respectively formed in component union with the associated drive pulley (13), wherein the component union is preferably formed by a respective driven gear (7), wherein the rotary valves (7) are preferably respectively formed by the disk-shaped basic form of the driven gear (7), and the driven pulleys (15) receptively assigned to the rotary valves are formed by the gear rim encircling the disk-shaped base body.

6. Control valve assembly (1) according to one of claims 3 to 5, wherein the drive pulley (13) and the driven pulleys (15) extend in a common plane, in particular independently of the position of the at least one coupling, wherein preferably the axis of rotation (R2) of the drive pulley (13) defining the normal of the common plane.

7. Control valve assembly (1) according to one of claims 3 to 6, wherein the at least one coupling (11) has a coupling disk (19), in particular a coupling gear (19), which preferably in the engaged position is in engagement, in particular in direct engagement, with the drive pulley (13) and the driven pulley (15) assigned with the one rotary valve (7) of the one rotary valve.

8. Control valve assembly (1) according to claim 7, wherein the coupling disk (19) in the engaged position extends in a common plane with the drive pulley (13) and the driven pulley (15) of the one rotary valves, and/or wherein the coupling disk (19) in the disengaged position is displaced relative to a common plane of the drive pulley (13) and the driven pulley (15) of the one rotary valve, wherein in particular the axis of rotation (R2) of the drive pulley (13) defines the normal of the common plane.

9. Control valve assembly (1) according to one of the preceding claims, wherein the at least one coupling (11) has a coupling drive (35), in particular formed as a linear drive, in particular an electromagnetic coupling drive (35), via which the coupling, in particular a coupling disk (19) of the coupling, can be displaced into the engaged position and into the disengaged position.

10. Control valve assembly (1) according to one of the preceding claims, wherein the at least one coupling (11) has a spring element (47) which, in the engaged position or in the disengaged position, provides a restoring force for displacing the coupling, in particular a coupling disk (19) of the coupling, into the respective other position.

11. Control valve assembly (1) according to one of the preceding claims, wherein the control valve assembly (1) comprises for each rotary valve (7) one of the at least one coupling (11) respectively, wherein the couplings are preferably assigned to the rotary valves in such a way that that the at least two rotary valves (7) can be coupled and decoupled independently of one another with the drive (9).

12. Control valve assembly (1) according to one of the preceding claims, wherein the control valve assembly (1) has at least three or four of the at least two rotary valves (7), wherein preferably the at least three or four rotary valves (7) are arranged in particular at equidistant distances from one another around the drive, in particular around the axis of rotation (R2) of a drive pulley (13) of the drive.

13. Control valve assembly (1) according to claim 12, wherein each of the at least three or four rotary valves (7) is assigned one of the at least one coupling (11), wherein preferably the couplings, in particular a respective coupling disk (19) of couplings, are arranged at in particular equidistant distances from one another around the drive, in particular around the axis of rotation (R2) of a drive pulley (13) of the drive.

14. Control valve assembly (1) according to one of the preceding claims, wherein the respective at least one flow path is formed by a respective fluid inlet and a fluid outlet of a housing enclosing the respective rotary valve (7), wherein preferably the housing encloses each of the at least two rotary valves (7) and/or a drive pulley (13) of the drive and/or one or each coupling disk (19) of the at least one coupling (11).

15. Control valve assembly (1) according to claim 14, wherein the respective one fluid inlet and one fluid outlet of at least one flow path are formed in alignment with one another in such a way that at least one of the at least two fluid flows can flow through the flow path substantially without deflection.

## Revendications

1. Ensemble de soupape de commande (1), destiné à régler au moins deux courants de fluide, notamment au moins deux courants d'agents réfrigérant, dans un système de conduits, notamment d'un véhicule automobile, tel qu'un véhicule automobile à entraînement électrique, comprenant :
- au moins deux coulisseaux rotatifs (7), destinés à fermer et à libérer chaque fois un trajet d'écoulement ;
- un entraînement (9), destiné à régler les au moins deux coulisseaux rotatifs ;
- au moins un accouplement (11), assorti d'une position d'accouplement, dans laquelle l'entraînement (9) est couplé de manière à transmettre la force avec au moins l'un des deux coulisseaux rotatifs (7) et d'une position de désaccouplement, dans laquelle l'entraînement (9) est désaccouplé de l'un des aux moins deux coulisseaux rotatifs (7),
l'entraînement (9) comportant une poulie d'entraînement,
**caractérisé en ce qu'**aux au moins deux coulisseaux rotatifs est associée chaque fois une poulie entraînée s'étendant le long du contour extérieur des coulisseaux rotatifs, par l'intermédiaire de laquelle l'entraînement règle les au moins deux coulisseaux rotatifs.

2. Ensemble de soupape de commande (1) selon la revendication 1, les au moins deux coulisseaux rotatifs (7) étant conçus sous la forme de coulisseaux rotatifs (7) en forme de disques, dont chacun comporte au moins un évidement de passage (17), destiné à libérer chaque fois l'au moins un trajet d'écoulement.

3. Ensemble de soupape de commande (1) selon la revendication 1 ou 2, la poulie d'entraînement étant un pignon d'entraînement (13) et les poulies entraînées (15) étant des couronnes dentées.

4. Ensemble de soupape de commande (1) selon la revendication 3, les poulies entraînées (15) étant fixement reliées, étant notamment conçues en monobloc avec les coulisseaux rotatifs, et / ou les poulies entraînées (15) étant conçues de préférence sous la forme de couronnes dentées entourant les coulisseaux rotatifs (7).

5. Ensemble de soupape de commande (1) selon la revendication 3 ou 4, les au moins deux coulisseaux rotatifs (7) étant conçus chacun en union d'éléments avec les poulies d'entraînement (13) qui leur sont associées, l'union d'éléments étant constituée de préférence par chaque fois un pignon entraîné (7), les coulisseaux rotatifs (7) étant constitués chacun de préférence par la forme de base en disque du pignon entraîné (7) et les poulies entraînées (15) associées chacune aux coulisseaux rotatifs étant constituées par la couronne dentée entourant le corps de base en forme de disque.

6. Ensemble de soupape de commande (1) selon l'une quelconque des revendications 3 à 5, la poulie d'entraînement (13) et les poulies entraînées (15) s'étendant notamment indépendamment de la position de l'au moins un accouplement dans un plan commun, de préférence l'axe de rotation (R2) de la poulie d'entraînement (13) définissant la normale du plan commun.

7. Ensemble de soupape de commande (1) selon l'une quelconque des revendications 3 à 6, l'au moins un accouplement (11) comportant une poulie d'accouplement (19), notamment un pignon d'accouplement (19), qui de préférence dans la position d'accouplement est en engrènement, notamment en engrènement direct avec la poulie d'entraînement (13) et la poulie entraînée (15) de l'un coulisseau rotatif, qui est associée à l'un coulisseau rotatif (7).

8. Ensemble de soupape de commande (1) selon la revendication 7, dans la position d'accouplement, la poulie d'accouplement (19) s'étendant dans un plan commun avec la poulie d'entraînement (13) et la poulie entraînée (15) de l'un coulisseau rotatif et /ou dans la position de désaccouplement, la poulie d'accouplement (19) étant décalée par rapport à un plan commun de la poulie d'entraînement (13) et de la poulie entraînée (15) de l'un coulisseau rotatif, notamment l'axe de rotation (R2) de la poulie d'entraînement (13) définissant la normale du plan commun.

9. Ensemble de soupape de commande (1) selon l'une quelconque des revendications précédentes, l'au moins un accouplement (11) comportant un entraînement d'accouplement (35) constitué notamment sous la forme d'un entraînement linéaire, notamment un entraînement d'accouplement (35) électromagnétique, par l'intermédiaire duquel l'accouplement, notamment une poulie d'accouplement (19) de l'accouplement peut être amenée en position d'accouplement et en position de désaccouplement.

10. Ensemble de soupape de commande (1) selon l'une quelconque des revendications précédentes, l'au moins un accouplement (11) comportant un élément à ressort (47), qui dans la position d'accouplement ou dans la position de désaccouplement met à disposition une force de rappel pour amener l'accouplement, notamment une poulie d'accouplement (19) de l'accouplement dans l'autre position respective.

11. Ensemble de soupape de commande (1) selon l'une quelconque des revendications précédentes, l'ensemble de soupape de commande (1) comportant pour chaque coulisseau rotatif (7) l'un des au moins un accouplement (11), les accouplements étant associés aux coulisseaux rotatifs de préférence de telle sorte, que les au moins deux coulisseaux rotatifs (7) puissent être accouplés et désaccouplés indépendamment l'un de l'autre avec l'entraînement (9).

12. Ensemble de soupape de commande (1) selon l'une quelconque des revendications précédentes, l'ensemble de soupape de commande (1) comportant au moins trois ou quatre des au moins deux coulisseaux rotatifs (7), de préférence les au moins trois ou quatre coulisseaux rotatifs (7) étant placés notamment à des écarts mutuels équidistants autour de l'entraînement, notamment autour de l'axe de rotation (R2) d'une poulie d'entraînement (13) de l'entraînement.

13. Ensemble de soupape de commande (1) selon la revendication 12, à chacun des au moins trois ou quatre coulisseaux rotatifs (7) étant associé chaque fois un des au moins un accouplement (11), de préférence les accouplements, notamment chaque fois une poulie d'accouplement (19) de l'un des accouplements étant placés notamment à des écarts mutuels équidistants autour de l'entraînement, notamment autour de l'axe de rotation (R2) d'une poulie d'entraînement (13) de l'entraînement.

14. Ensemble de soupape de commande (1) selon l'une quelconque des revendications précédentes, l'au moins un trajet d'écoulement respectif étant constitué par chaque fois une entrée de fluide et une sortie de fluide d'un boîtier entourant le coulisseau rotatif (7) respectif, de préférence le boîtier entourant chacun des au moins deux coulisseaux rotatifs (7) et / ou une poulie d'entraînement (13) de l'entraînement et / ou un ou chaque poulie d'accouplement (19) de l'au moins un accouplement (11).

15. Ensemble de soupape de commande (1) selon la revendication 14, les respectivement une entrée de fluide et une sortie de fluide d'au moins un trajet d'écoulement étant conçues en alignement l'une par rapport à l'autre, de telle sorte qu'au moins l'un des au moins deux courants de fluide puisse circuler sensiblement sans déviation à travers le trajet d'écoulement.
